# EUROPEAN PATENT APPLICATION

(11) **EP 0 869 139 A1**
(43) Date of publication of application: **07.10.1998**
(21) Application number: 98105271.5
(22) Date of filing: 24.03.1998
(51) Int. Cl.: C08G 18/46, C09D 175/04, C08G 71/00

(54) **Impact abrasion resistant coating compositions, method therefore and coated article**

(30) Priority: 02.04.1997 US 831810
(71) Applicant: BASF CORPORATION, Mount Olive, New Jersey 07828-1234 (US)
(72) Inventor: Bammel, Brian D., Highland, Michigan 48357 (US); McGee, John D., Highland, Michigan 48356 (US); Regulski, Danielle A., North Charleston, South Carolina (US); Bradford, Christopher J., Ann Arbor, Michigan 48108 (US)
(74) Representative: Münch, Volker, Dr.

(57) **Abstract**

A curable coating composition resistant to impact-abrasion induced damage comprising
A) a polymeric or oligomeric component comprising aliphatic ester, or aliphatic ether groups having thereon a plurality of reactive functionalities, and having a reactive functionality between 2 and 5 and an equivalent weight of between 150 and 750, and
B) a compound comprising a plurality of groups that are reactive with the reactive functionality on component (A). Also included are methods for obtaining the coating composition and a coated article having thereon a coating composition as described.

## Description

### Field of the Invention

The invention relates to curable coating compositions based on oligomeric or polymeric components having a highly defined architecture to impart specific physical characteristics to the coating.

### Background of the Invention

Curable coating compositions such as thermoset coatings are widely used in the coatings art. They are often used for topcoats in the automotive and industrial coatings industry. Color-plus-clear composite coatings are particularly useful as topcoats where exceptional gloss, depth of color, distinctness of image, or special metallic effects are desired. The automotive industry has made extensive use of these coatings for automotive body panels and plastic components. It is essential that the coatings be durable and resistant to weathering factors such as environmental degradation including environmental acid etch.

In addition to weatherability, other characteristics are desirable. For example, it may be desirable to provide a coating having a high degree of flexibility. This can be particularly advantageous if the substrate on which the coating is placed is itself flexible, as in the case of plastic, leather, or textile substrates.

In the case of coatings for plastics, additional performance characteristics are highly desirable. Such coatings must exhibit extreme flexibility at low temperatures to enable them to bend along with the plastic substrate upon impact or deformation. One preferred plastic within the automotive components market is thermoplastic polyolefin (TPO). TPO is used as the substrate for bumpers, claddings, facia and other trim on automobiles and poses performance challenges to a coating because conventional coatings are easily scraped away from the TPO substrate. Such damage may result from glancing bumper contacts with other vehicles, shopping carts, parking meters or other objects. The damage is evidenced by removal of the coating layers from the substrate exposing the plastic and resulting in a significant cosmetic defect. Such defects are recognized to be an ongoing problem throughout the industry.

The present invention is directed to coating compositions comprising oligomeric and polymeric components of a specific architecture that provide sufficient low temperature flexibility for application over plastics and also offer a high degree of resistance to impact abrasion damage, such as that evidenced on TPO substrates.

### Description of the Drawing

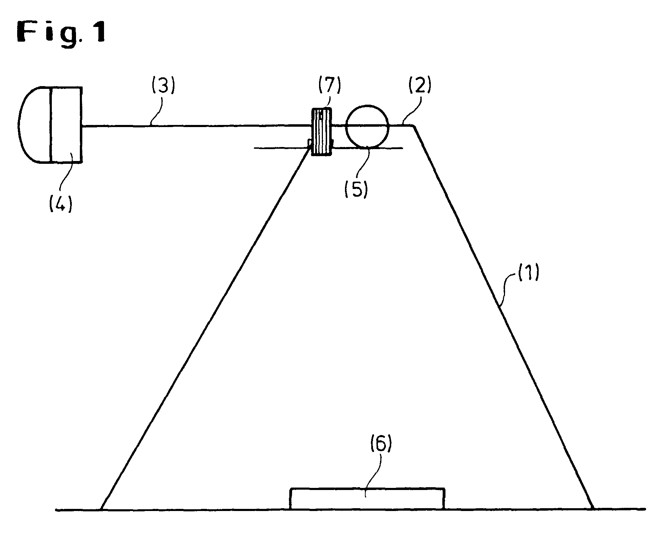

Fig. 1 illustrates the testing device used to test impact induced paint damage of the coating.

### Summary of the Invention

According to the present invention, there is provided a curable coating composition resistant to impact-abrasion induced damage. Impact-abrasion induced paint damage is also referred to in the industry as friction induced paint damage or gouge. According to the present invention, a coating composition is formed comprising (A) an oligomeric or polymeric component of a defined architecture and (B) a compound comprising a plurality of groups that are reactive with the reactive functionality on the polymeric or oligomeric component (A).

The oligomeric or polymeric component (A) has an architecture that provides flexibility within a cured film, and has reactive functionality thereon. The reactive functionality on the oligomeric or polymeric component is selected from the group consisting of hydroxyl, epoxy, isocyanate, carboxy, primary carbamate, amine, and mixtures thereof. The oligomeric or polymeric component has an equivalent weight of between 150 and 750 and a defined number of reactive functional groups.

The compound (B) comprising a plurality of groups that are reactive with the reactive functionality on the polymeric or oligomeric component (A). The reactive groups on (B) include active methylol or methylalkoxy groups on aminoplast crosslinking agents or on other compounds such as phenol/formaldehyde adducts, isocyanate groups, siloxane groups, epoxy, carboxylic acid, cyclic carbonate and anhydride groups.

The present invention provides highly impact abrasion resistant coatings having a good combination of properties such as durability, hardness, and resistance to scratching, marring, solvents, and acid etching. Coating compositions according to the invention can also provide low VOC levels and can be used to prepare coatings having excellent flexibility for use over a variety of flexible substrates.

### Detailed Description of the Invention

According to the present invention, a coating composition is formed comprising (A) an oligomeric or polymeric component of a defined architecture having aliphatic ester or aliphatic ether groups and compound (B) comprising a plurality of groups that are reactive with the reactive functionality on the oligomeric or polymeric component (A). Component (A) has an average functionality of between 2 and 5 and has an equivalent weight between 150 and 750. The architecture of the oligomeric or polymeric component (A) provides the cured coating composition with a high degree of flexibility.

The oligomeric or polymeric component (A) comprises a component according to one of the following formulae:

X-L-X'; I)

wherein X and X' may be the same or different and represent crosslinkable functionality selected from the group consisting of hydroxyl, amine, primary carbamate, isocyanate, epoxy, carboxyl and mixtures thereof and
L represents a segment comprising one or more units selected from the group consisting of aliphatic ester groups, aliphatic esters derived from lactones, aliphatic ether groups and mixtures thereof; or

   Z-(L ₙ -Y) ₙ II)

   wherein Z represents a linking group comprising a diol, polyol, diisocyanate, or polyisocyanate,
   Y represents a crosslinkable functionality selected from the group consisting of hydroxyl, amine, primary carbamate, isocyanate, epoxy, carboxyl and mixtures thereof, and
   Lₙ represents one or more units selected from the group consisting of aliphatic ester groups, esters derived from lactones, aliphatic ether groups and mixtures thereof, where each L ₙ can be the same or different, and
   n is the functionality of polymer or oligomer (A) and is a number between 2 and 5, preferably between 2.0 and 3.6;
      or 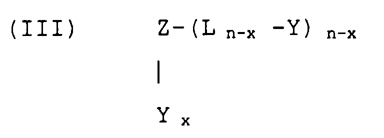 where
      Z represents a linking group comprising a diol, polyol, diisocyanate or polyisocyanate,
      Y represents crosslinkable functionality selected from the group consisting of hydroxyl, amine, primary carbamate, isocyanate, epoxy, carboxyl and mixtures thereof, and
      L is one or more units selected from the group consisting of aliphatic ester groups, esters derived from lactones, aliphatic ether groups and mixtures thereof, where each L can be the same or different,
      n is the functionality of polymer or oligomer (A) and is a number between 2 and 5, preferably between 2.0 and 3.6, and
      x is the number of functional end groups that do not contain a chain extending segment and is a number between 0 and n.

The value of n can be affected not only by the functionality of the Z group, but can be further modified via reaction of a portion of the Z group with non-functional end groups. For example, a polyisocyanate having a functionality of 3.6 can be reduced to 3.1 by reacting a fraction of the isocyanate with a non-functional end group such as an alcohol.

In formulae II and III, Z can be any diol or polyol. Useful examples include but are not limited to 1,6-hexane diol, trimethylolpropane, diethylene glycol, pentaerythritol and carbamate substituted diol or polyol, such as the diol obtained by reacting glycerin carbonate and ammonia.

In one embodiment of Formula I a hydroxy alkyl carbamate is used to ring open ε-caprolactone. X represents primary carbamate, L represents the ε-caprolactone derived polyester segment and X' represents hydroxyl groups.

In one embodiment of Formula II, Y is hydroxyl, L is an ε-caprolactone derived polyester and Z is a polyol. Examples of suitable polyols include diethylene glycol and trimethylolpropane (TMP). The diethylene glycol and TMP extended with ε-caprolactone are commercially available from Union Carbide under the trademark Tone® polyols.

In an alternative embodiment of Formula II, Y is primary carbamate L is based on an ε-caprolactone derived polyester, and Z is diisocyanate or polyisocyanate or a mixture thereof.

In an embodiment of Formula III, Z is polyisocyanate and a portion of the isocyanate is attached to a primary carbamate and the L group is a lactone derived polyester. Y and Yₓ are both primary carbamate.

In an alternative embodiment of Formula III, glycerine carbonate is reacted with ammonia followed by reaction of ε-caprolactone. In this embodiment Z represents the reaction product of glycerine carbonate and ammonia and L represents the repeating ester groups and Y represents the hydroxyl and carbamate functional groups.

Component (A) may also comprise a mixture of any of compositions according to formulas I, II and III. The oligomeric or polymeric components (A) according to formulas I, II and/or III may be combined with other resins not having the architecture of component (A), such as but not limited to polyester and acrylic resins and polymers, and added to coating compositions to obtain the advantages, particularly, the advantage of flexibility in a cured film, provided by the present invention.

In a preferred embodiment, the oligomeric components described in formula (I) are compounds having primary carbamate functionality, or a group that can be converted to a primary carbamate group, and hydroxyl functionality. Oligomeric components according to formula (I) can be the reaction product of: (a)(i) a compound having at least one carbamate group (or a group that can be converted to carbamate) and an active hydrogen group reactive with a lactone or a hydroxy carboxylic acid, and (a)(ii)a lactone or hydroxy carboxylic acid.

Primary carbamate groups can generally be characterized by the formula

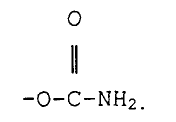

The oligomeric component (I) can be formed by reacting a lactone or hydroxy carboxylic acid with a compound having an active hydrogen group capable of undergoing a condensation reaction with the acid group of the hydroxy carboxylic acid or ring-opening the lactone (e.g., hydroxyl, amine, acid) and a carbamate or a group that can be converted to a primary carbamate. When a compound having an active hydrogen group and a group that can be converted to carbamate is used to react with the lactone or hydroxy carboxylic acid, conversion of the group to a carbamate can be accomplished during or after the ring-opening reaction.

Compounds having a carbamate group and an active hydrogen group are known in the art. Hydroxypropyl carbamate for example, is well known and commercially available. Amino carbamates are described in U.S. Patent 2,842,523. Alternatively, these compounds can be prepared by starting with a compound having an active hydrogen and a group that can be converted to primary carbamate as described below, and then converting that group to the primary carbamate prior to commencement of the reaction with the lactone or hydroxy carboxylic acid.

Groups that can be converted to carbamate include cyclic carbonate groups, epoxy groups, and unsaturated bonds. Cyclic carbonate groups can be converted to carbamate groups by reaction with ammonia, which ring-opens the cyclic carbonate to form a β-hydroxy carbamate. Epoxy groups can be converted to carbamate groups by first converting to a cyclic carbonate group by reaction with CO₂. This can be done at any pressure from atmospheric up to supercritical CO₂ pressures, but is preferably under elevated pressure (e.g., 4.137-10.34 bar (60-150 psi)). The temperature for this reaction is preferably 60-150°C. Useful catalysts include any that activate an oxirane ring, such as tertiary amine or quaternary salts (e.g., tetramethyl ammonium bromide), combinations of complex organotin halides and alkyl phosphonium halides (e.g., (CH₃)₃SnI, Bu₄SnI, Bu₄PI, and (CH₃)₄PI), potassium salts (e.g., K₂CO₃, KI) preferably in combination with crown ethers, tin octoate, calcium octoate, and the like. The cyclic carbonate group can then be converted to a carbamate group as described above. Any unsaturated bond can be converted to carbamate groups by first reacting with peroxide to convert to an epoxy group, then with CO₂ to form a cyclic carbonate, and then with ammonia to form the primary carbamate.

Other groups, such as hydroxyl groups or isocyanate groups can also be converted to carbamate groups. However, if such groups were to be present on the compound and then converted to carbamate after the reacting with the lactone or hydroxy carboxylic acid, they would have to be blocked so that they would not react with the lactone, the hydroxy carboxylic acid, or with the active hydrogen groups. When blocking these groups is not feasible, the conversion to carbamate would have to be completed prior to reaction with the lactone or hydroxy carboxylic acid. Hydroxyl groups can be converted to carbamate groups by reaction with cyanic acid (which may be formed in situ by thermal decomposition of urea) to form a primary carbamate group (i.e., unsubstituted carbamates). This reaction preferably occurs in the presence of a catalyst as is known in the art. A hydroxyl group can also be reacted with phosgene and then ammonia to form a compound having primary carbamate group(s). Finally, carbamates can be prepared by a transesterification approach where hydroxyl group reacted with an alkyl carbamate (e.g., methyl carbamate, ethyl carbamate, butyl carbamate) to form a primary carbamate group-containing compound. This reaction is performed under heat, preferably in the presence of a catalyst such as an organometallic catalyst (e.g., dibutyltin dilaurate). Other techniques for preparing carbamates are also known in the art and are described, for example, in P. Adams & F. Baron, "Esters of Carbamic Acid", Chemical Review, v. 65, 1965.

A less preferred method for converting OH groups to carbamate groups is to selectively react a compound such as a hydroxyalkyl carbamate with a diisocyanate to form a carbamate capped isocyanate derivative. Reaction of the derivative with a terminal hydroxyl group results in a terminal carbamate group.

One preferred class of compounds having an active hydrogen group and a group that can be converted to carbamate is the hydroxyalkyl cyclic carbonates. Hydroxyalkyl cyclic carbonates can be prepared by a number of approaches. Certain hydroxyalkyl cyclic carbonates like 3-hydroxypropyl carbonate (i.e., glycerine carbonate) are commercially available. Cyclic carbonate compounds can be synthesized by any of several different approaches. One approach involves reacting an epoxy group-containing compound with CO₂, under conditions and with catalysts as described hereinabove. Epoxides can also be reacted with β-butyrolactone in the presence of such catalysts. In another approach, a glycol like glycerine is reacted at temperatures of at least 80°C with diethyl carbonate in the presence of a catalyst (e.g., potassium carbonate) to form a hydroxyalkyl carbonate. Alternatively, a functional compound containing a ketal of a 1,2-diol having the structure: 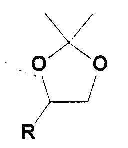 can be ring-opened with water, preferably with a trace amount of acid, to form a 1,2-glycol, which is then further reacted with diethyl carbonate to form the cyclic carbonate.

Cyclic carbonates typically have 5-6-membered rings, as is known in the art. Five-membered rings are preferred, due to their ease of synthesis and greater degree of commercial availability. Six-membered rings can be synthesized by reacting phosgene with 1,3-propane diol under conditions known in the art for the formation of cyclic carbonates. Preferred hydroxyalkyl cyclic carbonates used in the practice can be represented by the formula: 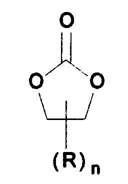 where R (or each instance of R if n is more than 1) is a hydroxyalkyl group of 1-18 carbon atoms, preferably 1-6 carbon atoms, and more preferably 1-3 carbon atoms, which may be linear or branched and may have substituents in addition to the hydroxyl (which itself may be primary, secondary, or tertiary), and n is 1 or 2, which may be substituted by one or more other substituents such as blocked amines or unsaturated groups. More preferably, R is -CₘH₂ₘOH where the hydroxyl may be primary or secondary and m is 1 to 8, and even more preferably, R is -(CH₂)ₚ-OH where the hydroxyl is primary and p is 1 to 2.

Lactones that can be ring opened by an active hydrogen are well-known in the art. They include, for example, ε-caprolactone, γ-caprolactone, β-butyrolactone, β-propriolactone, γ-butyrolactone, α-methyl-γ-butyrolactone, β-methyl-γ-butyrolactone, γ-valerolactone, δ-valerolactone, γ-nonanoic lactone, γ-octanoic lactone, and pentolactone. In one preferred embodiment, the lactone is ε-caprolactone. Lactones useful in the practice of the invention can also be characterized by the formula: 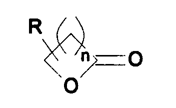 wherein n is a positive integer of 1 to 7 and R is one or more H atoms, or substituted or unsubstituted alkyl groups of 1-7 carbon atoms.

The lactone ring-opening reaction is typically conducted under elevated temperature (e.g., 80-150°C). The reactants are usually liquids so a solvent is not necessary. However, a solvent may be useful in promoting good conditions for the reaction even if the reactants are liquid. Any non-reactive solvent may be used, including both polar and nonpolar organic solvents. Examples of useful solvents include toluene, xylene, methyl ethyl ketone, methyl isobutyl ketone, and the like. A catalyst is preferably present. Useful catalysts include proton acids (e.g., octanoic acid, Amberlyst® 15 (Rohm & Haas)), and tin catalysts (e.g., stannous octoate). Alternatively, the reaction can be initiated by forming a sodium salt of the hydroxyl group on the molecules to react with the lactone ring.

The lactone ring-opening reaction provides chain extension of the molecule if sufficient amounts of the lactone are present. The relative amounts of the carbamate compound (a)(i) and the lactone (a)(ii) can be varied to control the degree of chain extension. The opening of the lactone ring with a hydroxyl or amine group results in the formation of an ester or amide and an OH group. The OH group can then react with another available lactone ring, thus resulting in chain extension. The reaction is thus controlled by the proportion of lactone in the relative to the amount of initiator compound (a)(i).

A compound (a)(i) having a hydroxyl active hydrogen group can also be reacted with a hydroxy carboxylic acid to form the carbamate compound (I). Useful hydroxy carboxylic acids include dimethylhydroxypropionic acid, hydroxy stearic acid, tartaric acid, lactic acid, 2-hydroxyethyl benzoic acid, and N-(2-hydroxyethyl)ethylene diamine triacetic acid. The reaction can be conducted under typical transesterification conditions, e.g., temperatures from room temperature to 150°C with transesterification catalysts such as such as calcium octoate, metal hydroxides (e.g., KOH), Group I or II metals (e.g., Na, Li), metal carbonates (e.g., K₂CO₃) which may be enhanced by use in combination with crown ethers, metal oxides (e.g., dibutyltin oxide), metal alkoxides (e.g., NaOCH₃, Al(OC₃H₇)₃), metal esters (e.g., stannous octoate, calcium octoate, or protic acids (e.g., H₂SO₄), MgCO₃, or Ph₄SbI. The reaction may also be conducted at room temperature with a polymer-supported catalyst such as Amberlyst-15® (Rohm & Haas) as described by R. Anand, Synthetic Communications, 24(19), 2743-47 (1994.

In a preferred embodiment of formula (II), the oligomeric or polymeric component is formed by reaction of the component as described in the preferred embodiment for formula (I) with a diisocyanate or polyisocyanate. Thus, this embodiment can be described as a core to which a plurality of carbamate-functional residues of the preferred embodiment of formula (I) are attached.

A preferred embodiment of Formula III is obtained by admixing the preferred embodiment of formula (I) with other compounds comprising at least one hydroxyl group plus a carbamate group (e.g., hydroxypropyl carbamate) prior to the reaction with the di- or poly-isocyanate. In such a case, the resulting reaction product mixture will reflect the stoichiometric ratio of components according to the preferred embodiment of Formula (I) to such other compounds.

The polyisocyanate can be an aliphatic polyisocyanate, including a cycloaliphatic polyisocyanate or an aromatic polyisocyanate. Useful aliphatic polyisocyanates include ethylene diisocyanate, 1,2-diisocyanatopropane, 1,3-diisocyanatopropane, 1,6-diisocyanatohexane, 1,4-butylene diisocyanate, lysine diisocyanate, 1,4-methylene bis-(cyclohexyl isocyanate) and isophorone diisocyanate. Useful aromatic diisocyanates and araliphatic diisocyanates include the various isomers of toluene diisocyanate, meta-xylylenediioscyanate and para-xylylenediisocyanate, also 4-chloro-1,3-phenylene diisocyanate, 1,5-tetrahydro-naphthalene diisocyanate, 4,4'-dibenzyl diisocyanate and 1,2,4-benzene triisocyanate can be used. In addition, the various isomers of α,α,α',α'-tetramethyl xylene diisocyanate can be used. Oligomeric or polymeric polyisocyanates prepared by reaction of an excess of monomeric polyisocyanates with a polyol may be used. Also, isocyanurates such as the isocyanurate of isophorone diisocyanate or the isocyanurate of hexamethylene diisocyanate may be used. Biurets of isocyanates such as DESMODUR® N100 from Mobay are also useful.

The composition of the invention is cured by a reaction of the polymeric or oligomeric component (A) with a component (B) that is a compound having a plurality of functional groups that are reactive with the reactive functionality on component (A). The reactive groups on (B) include active methylol or methylalkoxy groups on aminoplast crosslinking agents or on other compounds such as phenol/formaldehyde adducts, isocyanate groups, siloxane groups, cyclic carbonate groups, and anhydride groups. Examples of (B) compounds include melamine formaldehyde resin (including monomeric or polymeric melamine resin and partially or fully alkylated melamine resin), urea resins (e.g., methylol ureas such as urea formaldehyde resin, alkoxy ureas such as butylated urea formaldehyde resin), polyanhydrides (e.g., polysuccinic anhydride), and polysiloxanes (e.g., trimethoxy siloxane). Aminoplast resin such as melamine formaldehyde resin or urea formaldehyde resin are especially preferred. Also preferred are aminoplast resins where one or more of the amino nitrogens is substituted with a carbamate group for use in a process with a curing temperature below 150°C, as described in U.S. Patent 5,300,328.

Alternatively component (B) may be a polymeric isocyanate where component (A) comprises functional groups reactive with isocyanate. Polymeric isocyantes suitable as component (B) are known in the art and include polymers of the following isocyanates: hexamethylene diisocyanate, isophorone diisocyanate, 4,4'-biphenylene diisocyanate, toluene diisocyanate, bis cyclohexyl diisocyanate, tetramethylene xylene diisocyanate, ethyl ethylene diisocyanate, 2,3-dimethyl ethylene diisocyanate, 1-methyltrimethylene diisocyanate, 1,3-cyclopentylene diisocyanate, 1,4-cyclohexylene diisocyanate, 1,3-phenylene diisocyanate, 1,5-napthylene diisocyanate, bis-(4-isocyanatocycolhexyl)-methane, and the like. Polymers refers to isocyanurates, biurets, allophanates and polyol adducts of the above listed isocyanates.

Depending on the functionality of component (A), epoxy, acid or anhydride functional crosslinking agents may also be utilized in coating compositions of the present invention.

The coating composition according to the present invention can be applied without solvent. However, in many cases, it is desirable to use a solvent in the coating composition as well. This solvent should act as a solvent with respect to both the oligomeric or polymeric component (A) as well as the component (B). In general, depending on the solubility characteristics of components (A) and (B), the solvent can be any organic solvent and/or water. In one preferred embodiment, the solvent is a polar organic solvent. More preferably, the solvent is a polar aliphatic solvent or polar aromatic solvent. Still more preferably, the solvent is a ketone, ester, acetate, aprotic amide, aprotic sulfoxide, or aprotic amine. Examples of useful solvents include methyl ethyl ketone, methyl isobutyl ketone, amyl acetate, ethylene glycol butyl ether-acetate, propylene glycol monomethyl ether acetate, xylene, N-methylpyrrolidone, or blends of aromatic hydrocarbons. In another embodiment, the solvent can be water or a mixture of water with co-solvents.

The coating composition used in the practice of the invention may include a catalyst to enhance the cure reaction. For example, when aminoplast compounds, especially monomeric melamines, are used as component (B), a strong acid catalyst may be utilized to enhance the cure reaction. Such catalysts are well-known in the art and include, for example, p-toluenesulfonic acid, dinonylnaphthalene disulfonic acid, dodecylbenzenesulfonic acid, phenyl acid phosphate, monobutyl maleate, butyl phosphate, and hydroxy phosphate ester. Other catalysts that may be useful in the composition of the invention include Lewis acids, zinc salts, and tin salts.

Coating compositions can be coated on the article by any of a number of techniques well-known in the art. These include, for example, spray coating, dip coating, roll coating, curtain coating, and the like. For automotive components, spray coating is preferred. One advantage that can be achieved with coating compositions according to the invention is that coatings with a high degree of flexibility can be prepared. Accordingly, in a preferred embodiment, the substrate onto which the coating is applied is flexible, such as plastic, leather, or textile substrates.

Any additional agent used, for example, surfactants, fillers, stabilizers, wetting agents, dispersing agents, adhesion promoters, UV absorbers, HALS, etc. may be incorporated into the coating composition. While the agents are well-known in the prior art, the amount used must be controlled to avoid adversely affecting the coating characteristics.

In one preferred embodiment, the coating composition according to the invention is preferably utilized in a high-gloss coating and/or as the clearcoat of a composite color-plus-clear coating. High-gloss coatings as used herein are coatings having a 20° gloss (ASTM D523-89) or a DOI (ASTM E430-91) of at least 80. In other preferred embodiments, the coating composition may be utilized to prepare high-gloss or low-gloss primer or enamel coatings.

When the coating composition of the invention is used as a high-gloss pigmented paint coating, the pigment may be any organic or inorganic compounds or colored materials, fillers, metallic or other inorganic flake materials such as mica or aluminum flake, and other materials of kind that the art normally names as pigments. Pigments are usually used in the composition in an amount of 2% to 350%, based on the total weight (not including solvent) of components A and B (i.e., a P:B ratio of 0.02 to 3.5).

When the coating composition according to the invention is used as the clearcoat of a composite color-plus-clear coating, the pigmented basecoat composition may be any of a number of types well-known in the art, and does not require explanation in detail herein. Polymers known in the art to be useful in basecoat compositions include acrylics, vinyls, polyurethanes, polycarbonates, polyesters, alkyds, and siloxanes. Preferred polymers include acrylics and polyurethanes. In one preferred embodiment of the invention, the basecoat composition also utilizes a carbamate-functional acrylic polymer. Basecoat polymers are preferably crosslinkable, and thus comprise one or more type of cross-linkable functional groups. Such groups include, for example, hydroxy, isocyanate, amine, epoxy, acrylate, vinyl, silane, and acetoacetate groups. These groups may be masked or blocked in such a way so that they are unblocked and available for the cross-linking reaction under the desired curing conditions, generally elevated temperatures. Useful cross-linkable functional groups include hydroxy, epoxy, acid, anhydride, silane, and acetoacetate groups. Preferred cross-linkable functional groups include hydroxy functional groups and amino functional groups.

Basecoat polymers may be self-cross-linkable, or may require a separate cross-linking agent that is reactive with the functional groups of the polymer. When the polymer comprises hydroxy functional groups, for example, the cross-linking agent may be an aminoplast resin, isocyanate and blocked isocyanates (including isocyanurates), and acid or anhydride functional cross-linking agents.

The coating compositions described herein are preferably subjected to conditions so as to cure the coating layers. Although various methods of curing may be used, heat-curing is preferred. Generally, heat curing is effected by exposing the coated article to elevated temperatures provided primarily by radiative heat sources. Curing temperatures will vary depending on the particular cross-linking agents, however they generally range between 93°C and 177°C. The coating composition according to the present invention is curable even at relatively low cure temperatures. Thus, in a preferred embodiment, the cure temperature is preferably between 115°C and 150°C, and more preferably at temperatures between 115°C and 138°C for a blocked acid catalyzed system. For an unblocked acid catalyzed system, the cure temperature is preferably between 82°C and 99°C The curing time will vary depending on the particular components used, and physical parameters such as the thickness of the layers, however, typical curing times range from 15 to 60 minutes, and preferably 15-25 minutes for blocked acid catalyzed systems and 10-20 minutes for unblocked acid catalyzed systems.

The invention is further described in the following non-limiting examples.

### Composition #1

The ε-caprolactone, hydroxy propyl carbamate and toluene were added to a glass round-bottom flask equipped with stirrer, thermometer, and inlet for inert gas. After thorough mixing, under inert atmosphere, the stannous octoate was added. The mixture was heated to 130°C and maintained at that temperature for a period of 4.5 hours, then cooled to room temperature.

| **Material** | **Weight (g)** |
|---|---|
| **ε-caprolactone** | 5716 |
| **Hydroxy Propyl Carbamate** | 2385 |
| **Toluene** | 886 |
| **Stannous octoate** | 14 |

### Composition #2

The isophorone diisocyanate was added to a glass round-bottom flask equipped with stirrer, thermometer, and inlet for inert gas. Composition #1 was added with mixing under inert atmosphere over a one hour period with sufficient heating to promote the exothermic reaction. At the onset of the exotherm, cooling was applied such that the temperature climbed to a maximum of 67°C. The mixture was heated to and maintained at a temperature of 80°C until all isocyanate was consumed. The mixture was reduced with propylene glycol methyl ether acetate and cooled to room temperature.

| **Material** | **Weight (g)** |
|---|---|
| **Isophorone diisocyanate** | 1222 |
| **Composition #1** | 4989 |
| **Propylene glycol methyl ether Acetate** | 1106 |

### Composition #3

The isocyanurate of isophorone diisocyanate and propylene glycol methyl ether acetate were added to a glass round-bottom flask equipped with stirrer, thermometer, and inlet for inert gas. Heating was applied under inert atmosphere to a temperature of 46°C and until the isocyanurate was fully solved by the propylene glycol methyl ether acetate. The n-butanol and composition #1 were added over a period of 40 minutes. The batch was allowed to exotherm until a temperature of 80°C was reached. This temperature was maintained until the reaction of the n-butanol and composition #1 had gone to completion. The additional n-butanol was added and the mixture maintained at 80°C until all isocyanate groups had been consumed. The mixture was then reduced with propylene glycol methyl ether acetate, then cooled to room temperature.

| **Material** | **Weight (g)** |
|---|---|
| **Isocyanurate of Isophorone Diisocyanate(100% N.V.)******* | 2068 |
| **propylene glycol methyl ether acetate** | 1340 |
| **Composition #1** | 3228 |
| **n-butanol** | 62 |
| **n-butanol** | 56 |
| **propylene glycol methyl ether acetate** | 378 |

| | |
|---|---|
| * Available from Huls America | |

### Example 1

A clearcoat was prepared by blending together the following ingredients:

| Ingredient | Weight in Grams |
|---|---|
| Composition #3 | 1250.5 |
| Resimene® 747^{a} | 143.4 |
| NACURE® XP-243^{b} | 30.8 |
| TINUVIN® 1130^{c} | 30.6 |
| TINUVIN® 123^{d} | 6.2 |
| BYK® 320^{e} | 1.9 |
| Lindron® 22^{f} | 3.5 |
| Ethylene glycol butyl ether acetate | 640.9 |
| n-butanol | 319.8 |
| Total | 2427.6 |
| This mixture was reduced with n-butyl acetate to an application viscosity of 31 seconds on a #4 Ford cup. | |

| | |
|---|---|
| ^{a} Resimine® 747 is a fully methylated melamine sold by Monsanto. | |
| ^{b} Nacure® XP-243 is a blocked acid catalyst available from King Industries. | |
| ^{c} Tinuvin® 1130 is an ultraviolet absorber available from Ciba Geigy. | |
| ^{d} Tinuvin® 123 is a hindered amine light stabilizer available from Ciba Geigy. | |
| ^{e} Byk® 320 is a surface modified agent available from Byk Industries. | |
| ^{f} Lindron® 22 is a surface modifying agent from Lindau Chemicals. | |

### Example 2

A clearcoat was prepared by blending together the following ingredients:

| Ingredient | Weight in Grams |
|---|---|
| Composition #3 | 324.4 |
| Resimene® 747 | 37.9 |
| NACURE® XP-243 | 8.0 |
| TINUVIN® 1130 | 8.2 |
| TINUVIN® 123 | 1.9 |
| BYK® 306^{a} | 2.3 |
| Ethylene glycol butyl ether acetate | 79.9 |
| n-butanol | 39.7 |
| Total | 502.3 |
| This mixture was reduced with n-butyl acetate to an application viscosity of 104 cP. | |

| | |
|---|---|
| ^{a} Byk® 306 is a surface modified agent available from Byk industries. | |

### Example 3

A clearcoat was prepared by blending together the following ingredients:

| Ingredient | Weight in Grams |
|---|---|
| Composition #3 | 290.6 |
| Resimene® 747 | 67.8 |
| NACURE® XP-243 | 8.2 |
| TINUVIN® 1130 | 8.5 |
| TINUVIN® 123 | 1.7 |
| BYK® 306 | 2.3 |
| Ethylene glycol butyl ether acetate | 81.4 |
| n-butanol | 40.7 |
| Total | 501.2 |

This mixture was reduced with n-butyl acetate to an application viscosity of 90 cP.

### Example 4

A clearcoat was prepared by blending together the following ingredients:

| Ingredient | Weight in Grams |
|---|---|
| Composition #1 | 286.4 |
| Resimene 747 | 147.4 |
| NACURE® XP-243 | 11.7 |
| TINUVIN® 1130 | 11.6 |
| TINUVIN® 123 | 2.2 |
| BYK® 306 | 3.3 |
| Ethylene glycol butyl ether acetate | 7.8 |
| n-butanol | 7.8 |
| Total | 478.2 |

This mixture was reduced with n-butyl acetate to an application viscosity of 165 cP.

### Example 5

A clearcoat was prepared by blending together the following ingredients:

| Ingredient | Weight in Grams |
|---|---|
| Composition #1 | 107.7 |
| Composition #2 | 117.1 |
| Resimene® 747 | 151.6 |
| NACURE® XP-243 | 10.0 |
| TINUVIN® 1130 | 10.1 |
| TINUVIN® 123 | 2.0 |
| BYK® 306 | 3.0 |
| Ethylene glycol butyl ether acetate | 49.9 |
| n-butanol | 50.3 |
| Total | 501.7 |

This mixture was reduced with n-butyl acetate to an application viscosity of 139 cP.

### Example 6

A clearcoat was prepared by blending together the following ingredients:

| Ingredient | Weight in Grams |
|---|---|
| TONE® 310^{a} | 262.9 |
| Resimene® 747 | 101.8 |
| NACURE® XP-243 | 10.9 |
| TINUVIN® 1130 | 10.9 |
| TINUVIN® 123 | 2.1 |
| BYK® 306^{b} | 3.1 |
| Ethylene glycol butyl ether acetate | 29.6 |
| n-butanol | 29.3 |
| Total | 450.6 |
| This mixture was reduced with n-butyl acetate to an application viscosity of 166 cP. | |

| | |
|---|---|
| ^{a}Tone® 310 is ε-caprolactone based polyol available from Union Carbide. | |

### Example 7

A clearcoat was prepared by blending together the following ingredients:

| Ingredient | Weight in Grams |
|---|---|
| TONE® 310 | 205.6 |
| Resimene® 747 | 159.2 |
| NACURE® XP-243 | 11.0 |
| TINUVIN® 1130 | 11.4 |
| TINUVIN® 123 | 2.4 |
| BYK® 306 | 2.9 |
| Ethylene glycol butyl ether acetate | 35.7 |
| n-butanol | 29.9 |
| Total | 458.1 |

This mixture was reduced with n-butyl acetate to an application viscosity of 183 cP.

### Example 8

A clearcoat was prepared by blending together the following ingredients:

| Ingredient | Weight in Grams |
|---|---|
| | |

| A-Component: | |
|---|---|
| TONE® 310 | 273.2 |
| TINUVIN® 1130 | 14.2 |
| TINUVIN® 123 | 2.9 |
| BYK® 306 | 3.9 |
| Ethylene glycol butyl ether acetate | 51.2 |

| B-Component: | |
|---|---|
| Desmodur® N3390^{a} | 136.9 |
| Desmodur® Z4370/2^{b} | 117.3 |
| methyl isobutyl ketone | 53.2 |
| Total | 652.8 |
| The A-component mixture was reduced with n-butyl acetate to an application viscosity of 126 cP. The A-component and B-component blended together just before application. | |

| | |
|---|---|
| ^{a} Desmodur® N3390 is the isocyanurate of hexamethylene diisocyanate. | |
| ^{b} Desmodur® Z4370/2 is the isocyanurate of isophorone diisocyanate. | |

### Example 9

A commercial 1-component flexible clearcoat which is commercially available from BASF Corporation and identified as E86CM200. This clearcoat is based on a hydroxyl functional acrylic polymer which is crosslinked with a methylated melamine crosslinker sold under the trademark Resimene® 747.

This clearcoat, E86CM200, was reduced with n-butyl acetate to an application viscosity of 24 seconds #4 Ford.

### Example 10

A commercial 2-component flexible clearcoat which is commercially available from BASF Corporation. The A-component is identified as E42CM024 and the B-component is identified as N52CM045. This clearcoat is based on a hydroxyl functional acrylic polymer which is crosslinked with a blend of isocyanates.

This clearcoat, E42CM024, was reduced with n-butyl acetate to an application viscosity of 24 seconds #4 Ford.

The clearcoat compositions of Examples 1-10 were spray applied to a white pigmented basecoat to form color-plus-clear coatings over a Thermoplastic Polyolefin (TPO) substrate, Dexter Dexflex D-161B, that was primed with an adhesion promoter. The white pigmented basecoat used for Examples 1-10 is commercially available from BASF Corporation and identified as R86WE466. The adhesion promoter used for Examples 1-10 is commercially available from Morton and identified as Morton HP210544G1.

The adhesion promoter was spray applied in one coat to the TPO plaques at a temperature of about 24°C. A 5-minute flash time was allowed at about 24°C before application of the basecoat. The basecoat was spray applied in two coats to the adhesion promoted plaques at a temperature of about 24°C. A 30 second flash time was allowed between the two basecoat applications. After the second basecoat application, a flash time of approximately 5 minutes was allowed before application of the clearcoat compositions. The clearcoat compositions of Examples 1-10 were each spray applied to the basecoated plaques in two coats with a 60 second flash between each coat at about 24°C. The clearcoat was flashed at ambient temperature for 10 minutes and then baked for 30 minutes at 121°C. The plaques were baked in a horizontal position in a gas convection oven.

### Testing of Coating Compositions

The above described coating compositions were tested for impact abrasion resistance according to the following test method.

The Sledge Test is a method of evaluating impact induced paint damage under development by D&S Plastics International of Auburn Hills, Michigan. This test method is similar to many of the pendulum impact tests such as Izod, König and Persoz Pendulum Hardness Tests. This test involves the glancing impact of a 6.804 kg (15 pound) blunt sledge on a coated substrate.

The testing apparatus is shown in Fig. 1 and comprises an open framework (1) connected by a cross-bar (2). A pendulum arm (3) with a 6.804 kg (15 pound) semi-circle 'sledge' weight (4) is attached to the cross-bar (2). The pendulum arm length (3) is 59.1cm (23.27 inches) from the center of revolution (5) to the tip of the 'sledge' weight (4). The distance from the center of revolution (5) to the top of the test sample holder (6) is 59.2cm(23.31 inches). This gives an impact depth at 0° of 0.109 cm (0.043 inches) with a 0.32 cm thick standard test plaque.

The test sample is first wiped with isopropyl alcohol and conditioned for 1 hour at 73.9 °C(165°F). During this time the 'sledge' weight (4) is also cleaned with isopropyl alcohol. When the sample is ready for test the pendulum arm (3) is raised to 90° from the test sample holder (6) and locked in place with a release mechanism (7). The test sample is removed from the oven and immediately placed in the sample holder (6). The release mechanism (7) is then tripped and the pendulum arm (3)arcs down and the 'sledge' weight (4) contacts the test sample with a glancing impact. The 'sledge' weight (4) is then raised back to the ready position at 90° to the test sample holder and the test sample is removed. Using a clear overlay, with a 5mm X 5mm grid, the area of paint removed in mm² is reported. The higher the number the more damage that was incurred on the sample.

The results for clearcoat compositions of Examples 1-10 are reported in Table I.

**Table I**

| Comparative Results Table for Clearcoat Compositions | | | |
|---|---|---|---|
| **Coating** | **Equivalent Weight** | **Average Functionality** | **Sledge Area Removed** |
| **Example 1** | 705 | 3.1 | 0 |
| **Example 2** | 705 | 3.1 | 0 |
| **Example 3** | 705 | 3.1 | 0 |
| **Example 4** | 202 | 2 | < 1 |
| **Example 5** | 286 | 2 | 0 |
| **Example 6** | 299 | 3 | < 1 |
| **Example 7** | 299 | 3 | 0 |
| **Example 8** | 299 | 3 | 0 |
| **Example 9 1k Commercial** | 565 | 6.1 | 115 |
| **Example 10 2k Commercial** | 407 | 7.7 | 137 |

## Claims

1. A curable coating composition resistant to impact-abrasion induced damage comprising
A) a polymeric or oligomeric component comprising aliphatic ester, or aliphatic ether groups having thereon a plurality of reactive functionalities, and having a reactive functionality between 2 and 5 and an equivalent weight of between 150 and 750, and
B) a compound comprising a plurality of groups that are reactive with the reactive functionality on component (A).

2. The curable coating composition acording to claim 1 wherein compound (A) is selected from the group consisting of
X-I-X'; I)
wherein X and X' may be the same or different and represent crosslinkable functionality selected from the group consisting of hydroxyl, amine primary carbamate, isocyanate, epoxy, carboxyl and mixtures thereof and
L represents a segment comprising one or more units selected from the group consisting of aliphatic ester groups, aliphatic esters derived from lactones, aliphatic ether groups and mixtures thereof,
Z-(L ₙ -Y) ₙ II)
wherein Z represents a linking group selected from the group consisting of diols, polyols, diisocyanates and polyisocyanates,
Y represents a crosslinkable functionality selected from the group consisting of hydroxyl, amine, primary carbamate, isocyanate, epoxy, carboxyl and mixtures thereof, and
Lₙ represents one or more units selected from the group consisting of aliphatic ester groups, esters derived from lactones, aliphatic ether groups and mixtures thereof, where each L ₙ can be the same or different, and
n is the functionality of polymer or oligomer (A) and is a number between 2 and 5; 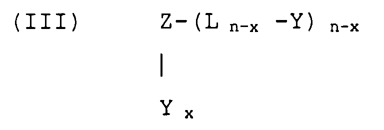 where
Z represents a linking group selected from the group consisting of diols, polyols, diisocyanates and polyisocyanates,
Y represents crosslinkable functionality selected from the group consisting of hydroxyl, amine, primary carbamate, isocyanate, epoxy, carboxyl and mixtures thereof, and
L is one or more units selected from the group consisting of aliphatic ester groups, esters derived from lactones, aliphatic ether groups and mixtures thereof, where each L can be the same or different,
n is the functionality of polymer or oligomer (A) and is a number between 2 and 5, and
x is the number of functional end groups that do not contain a chain extending segment and is a number between 0 and n; and mixtures of (I), (II) and (III).

3. The coating composition according to claim 2 wherein n is a number between 2.0 and 3.6.

4. The coating composition according to claim 2 wherein in formula (I) X and X' are selected from the group consisting of hydroxyl and primary carbamate.

5. The coating composition according to claim 2 wherein in formula (II) Y is hydroxyl, L is an e-caprolactone derived polyester and Z is a polyol.

6. The coating composition according to claim 2 wherein Z is selected from the group consisting of 1,6-hexane diol, trimethylolpropane, diethylene glycol, pentaerythritol and carbamate substituted diol or polyol.

7. The coating composition according to claim 2 wherein in Formula (III) Z represents a diol or polyol with a pendant carbamate group.

8. The coating composition according to claim 2 wherein in formula (III) Y is primary carbamate and Z is polyisocyanate and x is between n and 0.

9. The coating composition according to any one of the claims 1 to 8 wherein
the reactive groups on component (B) are selected from the group consisting of active methylol and methylalkoxy groups on aminoplast crosslinking agents, active methylol and methylalkoxy groups on phenol/formaldehyde adducts, isocyanate groups, siloxane groups, cyclic carbonate groups, and anhydride groups.

10. The coating composition according to any one of the claims 1 to 9 wherein component (B) is selected from the group consisting of melamine formaldehyde resin, urea resins, polyisocyanates, polyanhydrides, and polysiloxanes.

11. The coating composition according to claim 10 wherein component (B) is selected from the group consisting of monomeric melamine, polymeric melamine resin, partially alkylated and fully alkylated melamine resins.

12. The coating composition according to claim 10 wherein component (B) is selected from the group consisting of polyisocyanate resins.

13. The coating composition according to claim 2 wherein the oligomeric or polymeric component (A) comprises
(a) a compound comprising carbamate and hydroxyl functional groups that is the reaction product of
(i) a compound comprising a carbamate group or a group that can be converted to a carbamate or group, and an active hydrogen group that is reactive with a lactone or hydroxy carboxylic acid, and
(ii) a lactone or a hydroxy carboxylic acid.

14. The coating composition according to claim 13 wherein the active hydrogen group on (a)(i) is selected from the group consisting of hydroxyl and amino groups.

15. The coating composition according to claim 13 wherein component (A) further comprises
(iii) a compound that is reactive with hydroxyl groups
on a plurality of molecules of compound (a)(i), but that is not reactive with the carbamate groups on compound (a)(i).

16. The coating composition according to claim 15 wherein component (a) (iii) comprises isocyanate.

17. The coating composition according to claim 13 or 15 wherein said compound (a) comprises carbamate and hydroxyl functional groups.

18. The coating composition according to claim 13 or 15 wherein the compound (a)(ii) is a lactone.

19. The coating composition according to claim 2 wherein component (A) is a mixture of compounds selected from the group consisting of (I), (II) and (III).

20. The coating composition according to claim 1 or 2 further comprising a compound selected from the group consisting of acrylic and polyester polymers and resins.

21. The coating composition according to any one of the claims 1 to 20 that is a clear coating composition.

22. The coating composition according to the claims 1 to 20 further comprising a pigment.

23. An article comprising a substrate having thereon a cured coating derived from the coating composition according to any one of the claims 1 to 22.

24. The article according to claim 23 wherein said substrate is a flexible substrate.
